Europäisches Patentamt

European Patent Office

Office européen des brevets

(11) Numéro de publication: **0 269 014 B1**

(12) # FASCICULE DE BREVET EUROPEEN

(45) Date de publication de fascicule du brevet: **22.04.92**  (51) Int. Cl.⁵: **G03B 39/00**, G02F 1/03

(21) Numéro de dépôt: **87117142.7**

(22) Date de dépôt: **20.11.87**

(54) **Dispositif de prise rapide de vues d'un objet.**

(30) Priorité: **25.11.86 LU 86686**

(43) Date de publication de la demande:
**01.06.88 Bulletin 88/22**

(45) Mention de la délivrance du brevet:
**22.04.92 Bulletin 92/17**

(84) Etats contractants désignés:
**BE DE ES FR GB GR IT LU NL**

(56) Documents cités:

IEEE 1981 IECI PROCEEDINGS, 9-12 novembre 1981, San Francisco, pages 7-12, IEEE, New York, US; A.N. PAYNE: "Adaptive digital control of high-speed rotating-mirror cameras"

PROCEEDINGS OF THE IEEE, vol. 58, no. 6, juin 1970, pages 886-893, New York, US; C.J. PETERS et al.: "Signal recorder-reproducer using a coherent light source and a photographic film record"

XEROX DISCLOSURE JOURNAL, vol.3, no. 1, janvier-février 1978, page 17, Stamford, US; R.F. BERGEN: "Improved X-ray imaging"

(73) Titulaire: **COMMUNAUTE EUROPEENNE DE L'ENERGIE ATOMIOUE (EURATOM)**
**Bâtiment Jean Monnet-DG XIII/A1 Plateau du Kirchberg**
**L-2920 Luxembourg(LU)**

(72) Inventeur: **Albertini, Carlo**
**Via dei Pini 17**
**I-21020 Ispra(IT)**
Inventeur: **Montagnani, Mario**
**Via G. Rossi 5**
**Bologna(IT)**

(74) Mandataire: **Weinmiller, Jürgen**
**Lennéstrasse 9 Postfach 24**
**W-8133 Feldafing(DE)**

## Description

L'invention se réfère à un dispositif de prise rapide de vues d'un objet.

Un dispositif de ce type est connu par le document IEEE 1981 IECI Proceedings, pages 7 à 12. Il utilise comme déflecteur un miroir rotatif ou un prisme rotatif qui envoit les images successives de l'objet sur des zones distinctes de la pellicule. Devant chacune des zones distinctes il y a une lentille convergente.

Si l'on arrive à enregistrer une séquence de $10^3$ images par seconde au maximum avec une caméra classique dans laquelle la pellicule est avancée entre deux prises successives, la limite de vitesse pour une caméra à prisme rotatif se situe par contre aux environs de $10^7$ images par seconde. Ce chiffre est obtenu lorsqu'on met simultanément en mouvement le prisme et la pellicule photosensible. Néanmoins, une telle caméra est encombrante à cause de ses composants mécaniques en mouvement rapide, et la netteté des images est insuffisante, même si l'on fait usage d'un système de fentes en aval du prisme.

Il existe, en outre, des caméras électroniques pour l'enregistrement de phénomènes rapides. Ces caméras comportent une photocathode qui transforme les photons de l'image en électrons, et des plaques électrostatiques qui défléchissent le faisceau électronique ainsi créé par la photocathode. Enfin, ces électrons tombent sur un écran à phosphore qui retransforme les électrons incidents en des photons qu'on peut enfin enregistrer sur une pellicule photosensible. Un désavantage de ce type de caméra est la nécessité d'utiliser de hautés tensions pour la deflexion d'un fasceau d'électrons.

Il est un but de la présente invention de proposer un dispositif de prise rapide de vues d'un objet qui ne présente plus les inconvénents cités ci-dessus. De cette maniére ce dispositif procure des images d'un haut degré de netteté.

Ce but est atteint selon l'invention par un dispositif comme revendiqué dans la revendication 1.

En ce qui concerne des caractéristiques d'une mise en oeuvre préférée de l'invention, référence est faite aux sous-revendications.

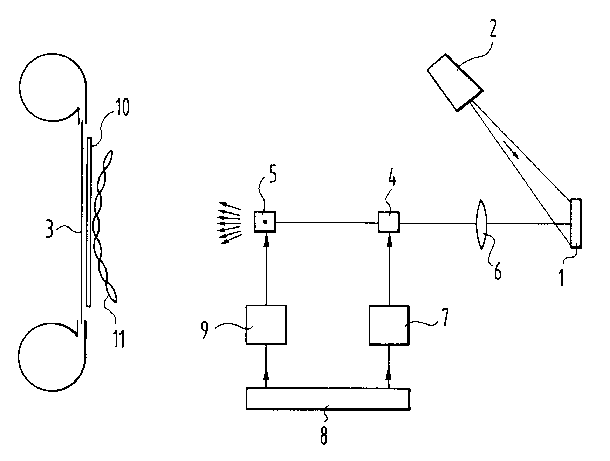

L'invention sera décrite ci-après plus en détail à l'aide d'un exemple préfére de mise en oeuvre et de la figure unique ci-annexée, qui montre très schématiquement cet exemple.

Des évènements rapides que subit un objet 1 doivent être enregistrés par le dispositif selon l'invention. Il comporte à ces fins une source laser 2 illuminant l'objet 1, et une pellicule photosensible 3 recevant une partie de la lumière laser réfléchie par l'objet. Entre l'objet 1 et la pellicule 3, la lumière parcourt un chemin optique qui comporte, en alignement et successivement, une cellule de Pockels 4 et un déflecteur piézo-optique 5. En amont de la cellule de Pockels, il peut y avoir une lentille de concentration 6, qui réduit le diamètre de la section du faisceau à l'entrée de cette cellule.

La cellule de Pockels 4 est commandée par des impulsions électriques de sorte qu'elle interrompe le chemin optique selon une cadence régulière. Les impulsions proviennent d'un générateur d'impulsions 7, qui est commandé par une horloge de synchronisation 8.

Le déflecteur piézo-optique comporte un cristal particulier qui change ses caractéristiques optiques en fonction d'une variation de pression qui peut être engendrée par un autre cristal piézo-électrique et un signal électrique qu'on lui applique. Ce signal est fourni par un autre générateur d'impulsions 9, qui, tout comme le générateur 7, est commandé par l'horloge de synchronisation 8, de telle sorte que la déflection de la lumière provenant de la cellule de Pockels 4 soit approximativement linéaire pendant un cycle prédéterminé. Pendant ce cycle, le générateur 7 interrompe plusieurs fois le faisceau qui lui est appliqué, ce qui permet d'enregistrer pendant chaque cycle sur la pellicule 3 une série de plusieurs images de l'objet. Le générateur 9 fournit donc des impulsions dont la fréquence est un sous-multiple de la fréquence des impulsions fournies par le générateur 7.

Si la sensivité de la pellicule 3 ne suffit pas pour l'énergie lumineuse de chaque image, on peut placer un écran 10 du type intensificateur passif à phosphore ou similaire en face de la pellicule. De tels écrans sont connus, par exemple à partir du document XEROX Disclosure Journal, vol. 3, N° 1, jan/fév. 1978, page 17. On peut, en outre, prévoir une lentille convergente 11 en face de chaque zone de l'écran 10 ou de la pellicule correspondant à une image individuelle. Une telle pluralité de lentilles est susceptible de rendre plus nettes les images enregistrées sur la pellicule.

L'invention n'est pas limitée à l'exemple de mise en ouvre décrit ci-dessus. Sans sortir du cadre de l'invention, on peut remplacer le déflecteur piézo-optique par un déflecteur à miroir rotatif ou basculant. On peut aussi associer au déflecteur un deuxième déflecteur, par exemple du type piézo-optique, qui balaye le faisceau dans une direction perpendiculaire à la direction de balayage du premier déflecteur. On obtient ainsi une séquence d'images sur la pellicule en plusieurs lignes adjacentes. Le même résultat peut être atteint en mettant la pellicule en mouvement perpendiculaire au plan de balayage du déflecteur 5.

Un avantage particulier du dispositif selon l'invention consiste dans la possibilité de moduler l'intensité de la lumière parcourant la cellule de Pockels à l'aide d'une adaptation adéquate de l'amplitude des impulsions sortant du générateur 7.

Grâce à cela, on peut compenser le fait que l'énergie lumineuse transférée par le déflecteur 5 n'est pas constante pour toutes les directions, et on peut ainsi fournir approximativement la même énergie lumineuse à toutes les zones de la pellicule et donc à toutes les images.

## Revendications

1. Dispositif de prise rapide de vues d'un objet comportant une source de lumière laser illuminant l'objet, une pellicule photosensible et un déflecteur rapide disposé entre l'objet et la pellicule et conçu pour faire balayer l'image de l'objet le long d'une ligne sur ladite pellicule, une cellule de Pockels (4) étant disposée sur le chemin optique entre l'objet (1) et ledit déflecteur rapide (5), cette cellule étant commandée par un générateur (7) fournissant une séquence d'impulsions électriques pendant chaque cycle de balayage dudit déflecteur rapide, de sorte qu'une suite d'images distinctes de l'objet soit transmise vers ledit déflecteur.

2. Dispositif selon la revendication 1, caractérisé en ce que le déflecteur rapide (5) est du type piézo-optique et qu'il est commandé par un générateur (9) d'impulsions électriques dont la fréquence est un sous-multiple de la fréquence des impulsions de commande de la cellule de Pockels (4).

3. Dispositif selon l'une des revendications précédentes, caractérisé en ce qu'un écran intensificateur d'image (10) est disposé entre le déflecteur (5) et la pellicule (3).

4. Dispositif selon la revendication 3, caractérisé en ce que l'écran intensificateur d'image (10) est du type à phosphore.

5. Dispositif selon l'une des revendications précédentes, caractérisé en ce qu'on dispose une lentille convergente (11) devant chaque zone de pellicule correspondant à une image distincte.

## Claims

1. A device for the rapid taking of views of an object, comprising a laser light source illuminating the object, a light-sensitive film and a rapid deflector disposed between the object and the film and designed to cause the image of the object to be scanned along a line on said film, a Pockels cell (4) being disposed on the optical path between the object (1) and said deflector (5), this cell being capable of being controlled by a sequence of electrical pulses during each scanning cycle of said rapid deflector, so that a succession of distinct images of the object is transmitted to said deflector.

2. A device according to claim 1, characterized in that the rapid deflector (5) is of the piezo-optical type, and in that it is capable of being controlled by a generator (9) of electrical pulses, the frequency of which is a sub-multiple of the frequency of the control pulses of the Pockels cell (4).

3. A device according to one of the preceding claims, characterized in that an image-intensifying screen (10) is disposed between the deflector (5) and the film (3).

4. A device according to claim 3, characterized in that the image-intensifying screen (10) is of the phosphor type.

5. A device according to one of the preceding claims, characterized in that a converging les (11) is disposed in front of each film zone corresponding to a distinct image.

## Patentansprüche

1. Anordnung zum raschen Aufnehmen von Ansichten eines Gegenstands, mit einer Laserlichtquelle, die den Gegenstand beleuchtet, einem lichtempfindlichen Film und einer schnellen Ablenkeinheit, die zwischen dem Gegenstand und dem Film angeordnet ist und das Bild des Gegenstands entlang einer Zeile auf dem Film ablenkt, wobei eine Pockelszelle (4) im optischen Pfad zwischen dem Gegenstand (1) und der schnellen Ablenkeinheit (5) angeordnet ist und die Zelle von einem Generator (7) gesteuert wird, der eine Folge elektrische Impulse während jedes Ablenkzyklus der schnellen Ablenkeinheit liefert, derart, daß eine Folge diskreter Bilder des Gegenstands zur Ablenkeinheit übermittelt wird.

2. Anordnung nach Anspruch 1, dadurch gekennzeichnet, daß die schnelle Ablenkeinheit (5) vom piezo-optischen Typ ist und von einem Generator (9) zur Erzeugung elektrischer Impulse gesteuert wird, dessen Frequenz ein Untervielfaches der Frequenz der Steuerimpulse der Pockelszelle (4) ist.

3. Anordnung nach Anspruch 1 oder 2, dadurch gekennzeichnet, daß ein Bildintensivierungsschirm zwischen der Ablenkeinheit (5) und dem Film (3) angeordnet ist.

4. Anordnung nach Anspruch 3, dadurch gekennzeichnet, daß der Bildintensivierungsschirm (10) ein Schirm auf Phosphorbasis ist.

5. Anordnung nach einem der vorhergehenden Ansprüche, dadurch gekennzeichnet, daß eine Sammellinse (11) vor jeder Zone des Films angeordnet wird, die einem diskreten Bild entspricht.